# EUROPÄISCHE PATENTSCHRIFT

(11) **EP 1 902 562 B1**
(45) Veröffentlichungstag und Bekanntmachung des Hinweises auf die Patenterteilung: **23.11.2011**
(21) Anmeldenummer: 06764168.8
(22) Anmeldetag: 13.07.2006
(51) Int. Cl.: H04L 29/06, H04L 12/22

(54) **VERFAHREN ZUR ZUSTELLUNG UND ARCHIVIERUNG VON DIGITALEN DOKUMENTEN**
METHOD FOR DELIVERING AND ARCHIVING DIGITAL DOCUMENTS
PROCEDE D'ENVOI ET D'ARCHIVAGE DE DOCUMENTS NUMERIQUES

(30) Priorität: 13.07.2005 DE 102005033195
(43) Veröffentlichungstag der Anmeldung: 26.03.2008
(73) Patentinhaber: Authentidate International AG, 40472 Düsseldorf (DE)
(72) Erfinder: WENDENBURG, Jan, C., 40237 Düsseldorf (DE); DAHM, Percy, 44577 Castrop-Rauxel (DE)
(74) Vertreter: Lenzing Gerber Stute
(86) Internationale Anmeldenummer: PCT/EP2006/064248
(87) Internationale Veröffentlichungsnummer: WO 2007/023032

(56) Entgegenhaltungen:
- WO-A2-2004/082204
- US-A1- 2002 143 704

## Beschreibung

Die Erfindung betrifft ein Verfahren zur Zustellung und Archivierung von signierten digitalen Dokumenten in einem elektronischen Netzwerk sowie eine Serverstruktur zur Signaturprüfung in einem offenen Netzwerk zur Durchführung dieses Verfahrens.

Gemäß der EU-Direktive zur Harmonisierung der Umsatzsteuer-Gesetzgebung sowie entsprechender nationaler Regulierungen der einzelnen EU-Mitgliedsstaaten ist es Unternehmen möglich, Rechnungslegungsprozesse vollständig elektronisch abzuwickeln. Zur Gewährleistung der Vorsteuerabzugsberechtigung auf Seiten des Rechnungsempfängers ist es dabei notwendig, elektronische Rechnungen zum Nachweis der Authentizität der Herkunft und der Integrität des Rechnungsdokuments elektronisch zu signieren. Das Qualitätsniveau der zur verwendenden elektronischen Signaturen ist dabei in einigen EU-Mitgliedsstaaten festgelegt - so berechtigen beispielsweise in Deutschland nur die sogenannten qualifizierten elektronischen Signaturen zum Vorsteuerabzug. Nachdem aber die Erstellung von elektronischen Rechnungen ebenso wie das Signieren dieser Rechnungen vollständig automatisiert werden kann, ergeben sich auf Seiten des Rechnungsstellers ganz erhebliche Vorteile. So können insbesondere Personalkosten, aber auch Versandkosten ebenso wie Kosten für das Erstellen von Rechnungen auf Papier in erheblichem Umfang eingespart werden. Diese Vorteile kommen insbesondere bei großen Dienstleistungsunternehmen, die immer wiederkehrende Dienstleistungen gegenüber einer Vielzahl von Kunden in regelmäßigen Zeitabständen abrechnen, wie beispielsweise Unternehmen auf dem Gebiet der Telekommunikation, zum Tragen.

Während sich aufgrund des hohen Automatisierungsgrads bei der Erstellung elektronischer Rechnungen erhebliche Vorteile für den Rechnungssteller ergeben, ist das Verarbeiten elektronischer Rechnungen auf Seiten des Rechnungsempfängers zumeist mit erheblichen Nachteilen verbunden. Es gibt nationale Vorschriften, in denen festgelegt ist, wie elektronisch signierte Rechnungen auf der Seite des Empfängers zu behandeln sind. Beispielsweise besteht in einigen Ländern die Notwendigkeit, die Signaturberechtigung und Integrität der Rechnungen vor einer weiteren Verarbeitung zu prüfen und ein Prüfprotokoll zur SignaturPrüfung zu erstellen. Des weiteren gilt, dass alle originären rechnungslegungsrelevanten Daten auf Seiten des Rechnungsstellers und auf Seiten des Rechnungsempfängers ordnungsgemäß elektronisch zu archivieren und im Rahmen des rechtlich definierten Aufbewahrungszeitraums vorzuhalten sind. Auf der Seite des Rechnungsstellers betrifft dies die elektronische Rechnung und die Signatur, auf der Empfängerseite die elektronische Rechnung, die elektronische Signatur und das Prüfprotokoll. Die Archivierung originärelektronischer Rechnungen in Form von Papierausdrücken ist ausdrücklich nicht zulässig.

Insbesondere für große Unternehmen stellt das System zum Stellen von elektronischen Rechnungen sowie das Archivieren von elektronischen Rechnungen und den zugehörigen Signaturen aufgrund der in aller Regel guten EDV-Infrastruktur kein wesentliches Problem dar. Demgegenüber besteht auf Seiten des Empfängers häufig das Problem, dass die technische Umgebung zum Prüfen der Signaturberechtigung und der Integrität der Rechnung sowie zur Archivierung der elektronischen Rechnung, der elektronischen Signatur und des Prüfprotokolls überhaupt nicht vorhanden ist. Auch auf Seiten des Rechnungsempfängers muss nämlich die Vollständigkeit, die Richtigkeit, die zeitnahe Verarbeitung, die zeitliche Ordnung, die Nachvollziehbarkeit, die Unveränderbarkeit und nicht zuletzt die Verfügbarkeit der elektronischen Rechnungen im Sinne der allgemein anerkannten Buchhaltungsregeln sichergestellt sein. Da bei vielen Rechnungsempfängern die technischen Voraussetzungen zur Sicherstellung dieser Kriterien fehlen, führt dies zu einer mangelnden Akzeptanz elektronischer Rechnungen auf Seiten der Empfänger, so dass Unternehmen, die darauf eingerichtet sind, Rechnungen elektronisch zu erstellen, sie zu signieren und beispielsweise über das Internet per E-Mail zu versenden, in der Lage sein müssen, auch Rechnungen in Papierform per Post verschicken zu können.

Aus der WO 2004/082204 A2 ist ein Verfahren zur Vereinfachung der technischen Handhabung von elektronisch signierten Daten auf Seiten des Empfängers bekannt. Der Kern des vorbekannten Verfahrens besteht darin, dass die für die zu versendenden Daten erzeugte elektronische Signatur vor dem elektronischen Versenden der Daten an den Empfänger auf Ihre Gültigkeit geprüft und zu dieser Prüfung ein Prüfprotokoll erstellt wird, das den zu versendenden, signierten Daten angehängt und mit den zu versendenden Daten an den Empfänger versandt wird. Die Prüfung der Signatur und das Erzeugen des Prüfprotokolls kann durch einen Internetdienst, beispielsweise einem Trust-Center, der sich im Datenstrom zwischen den Absender und dem Empfänger befindet, oder beispielsweise auch durch einen absenderseitig vorgesehenen Serverdienst zur Verfügung gestellt werden. Über einen Internetdienst können dem Empfänger auch Mittel zum Abrufen der an ihn versandten Daten über ein Webportal zur Verfügung gestellt werden.

Während das vorbekannte Verfahren geeignet ist, die Echtheit eines digitalen Dokuments und die Authentizität des Absenders nachzuweisen, bietet es allerdings keine technische Lösung dafür, eine lückenlose Archivierung von digitalen Dokumenten eines Absenders für den Empfänger sicherzustellen.

Somit besteht aufgrund der hohen technischen Anforderungen und der vielfach geringen technischen Infrastruktur auf Seiten des Empfängers das Problem, dass es nicht möglich ist, vollständig auf Papier bei dem Erstellen und Versenden von Rechnungen zu verzichten. Der dadurch bedingte Mehraufwand steht als Nachteil den möglichen Kostenersparnissen gegenüber und kann dazu führen, dass eine automatisierte Erstellung und elektronische Versendung digitaler Rechnungen für viele Unternehmen nicht rentabel ist.

Aus der WO 02/21315 A1 ist ein Archivsystem für Dateien bekannt, bei dem ein Nutzer sich zunächst registrieren muss und dann als registrierter Nutzer Daten ablegen kann. Zum Archivieren von Daten in dem Datenbanksystem muss sich der Nutzer zunächst anmelden und kann dann dem Datenbanksystem eine Datei zukommen lassen. Die Datei wird dann mit einer sogenannten electronic postmark (EPM) versehen und abgelegt. Diese EPM kann einen Hashwert der zu archivierenden Datei, einen Zeitstempel und/oder eine digitale Signatur enthalten. Die Datei kann zu einem späteren Zeitpunkt von dem Nutzer durch Angabe seiner Nutzerdaten und des Dateinamens wieder aus dem Archiv abgerufen werden.

Die Aufgabe der vorliegenden Erfindung besteht darin, ein Verfahren zur Zustellung, Prüfung und Archivierung von signierten digitalen Dokumenten in elektronischen Netzwerken zu schaffen, das auf Seiten des Empfängers einfach zu handhaben ist. Die Aufgabe besteht auch in der Bereitstellung einer Serverstruktur, mit der ein solches Verfahren möglich wird.

Diese Aufgabe wird mit den Verfahrensschritten des Anspruchs 1 gelöst.

Unter einem digitalen Dokument wird hier und im Folgenden jedes Dokument verstanden, das Informationen enthält, insbesondere Text beinhaltende Dokumente, Bilder, Tondokumente etc.

Ein elektronisches Netzwerk kann insbesondere ein offenes Netzwerk sein, wobei heutzutage das Internet die geeignete Infrastruktur für das erfindungsgemäße Verfahren bietet.

Unter einer digitalen Signatur wird hier und im Folgenden eine elektronische Unterschrift verstanden, die mit einem auf die zu signierenden digitalen Dokumente anzuwendenden asymmetrischen Verschlüsselungs-Algorithmus (public-key-Kryptographie) erzeugt wird und mit der ein Nachweis von Integrität und Authentizität des signierten digitalen Dokuments geprüft werden kann.

Unter Datenarchiv wird hier und im Folgenden jegliche Speichereinheit verstanden, in der digitale Daten gespeichert werden können. In diesem Zusammenhang wird unter Archivieren nicht nur eine Langzeitarchivierung für eine Dauer von mehreren Jahren verstanden, sondern auch eine vergleichsweise kurze Datenspeicherung.

Unter Identifier wird hier und im Folgenden eine Zeichenkette verstanden, mit der ein Datenpaket in eindeutiger Weise identifiziert werden kann.

Ein wesentlicher Kern der Erfindung besteht darin, dass es für den Empfänger mit dem an ihn versandten Identfier möglich ist, ein in einem Datenarchiv gespeichertes signiertes digitales Dokument eindeutig zu identifizieren, so dass das Vorhandensein eines digitalen Dokuments, seine Echtheit, die Authentizität seines Absenders etc. bei einem Audit nachprüfbar sind. Die Nachprüfbarkeit wird dadurch gewährleistet, dass der Identifier ebenso wie das digitale Dokument signiert ist.

Somit muss der Empfänger lediglich den Identifier wahlweise elektronisch oder in Papierform ablegen, um in Kenntnis der Netzwerkadresse des Datenarchivs einen eindeutigen Nachweis für das Vorhandensein und den Ort eines ihm zugestellten digitalen Dokuments liefern zu können. Damit ist der Empfänger in der Lage, ohne aufwändige technische Infrastruktur dennoch von den Vorteilen einer automatisierten elektronischen Datenverarbeitung zu profitieren. Dies gilt umso mehr, als selbst in sehr kleinen Geschäftsbetrieben eine Internetverbindung sowie eine E-Mail-Adresse zur Standardausstattung gehören.

Eine Manipulation des dem Identifier zugeordneten, im Datenarchiv abgespeicherte Datenpakets, beispielsweise durch Änderung oder Austausch des digitalen Dokuments oder des Austauschs des im Datenarchiv abgespeicherten Datenpakets durch ein anderes mit gleichem Identifier, kann insbesondere immer dann aufgedeckt werden, wenn dem Empfänger zusammen mit dem Identifier auch die Signatur zugesandt wird, da im Falle iener Manipulation die elektronische Signatur für die Kombination von ausgetauschtem digitalem Dokument und Identifier nicht mehr gültig ist.

Der Identifier kann grundsätzlich durch den Absender selbst erzeugt und dem digitalen Dokument hinzugefügt werden. Allerdings kann der dem digitalen Dokument hinzuzufügende Identifier vom Absender auch von einer mit dem Datenarchiv zusammenwirkenden Instanz angefordert werden. Letzteres hat den Vorteil, dass ohne weiteres sichergestellt ist, dass ein von einer solchen Instanz vergebener Identifier für das jeweils signierte Dokument unabhängig von der Person des Absenders und somit eindeutig ist.

Dem digitalen Dokument kann zusammen mit dem Identifier auch eine Information zur Netzwerkadresse des Datenarchivs beigefügt werden. Dies hat den Vorteil, dass im Datenpaket, das spätestens nach seiner Absendung vom Absender immer eine Kopie einer ursprünglichen Datei bzw. eines ursprünglichen Datenpakets ist, eine Information darüber enthalten ist, welche Kopie als nachprüfbares "Original" anzusehen ist, da der logische Speicherort der als "Original" anzusehenden Kopie durch die Netzwerkadresse eindeutig definiert ist.

Um das Verfahren auch für den Absender zu vereinfachen, kann die Signaturprüfung von einem Server oder einer Serverstruktur durchgeführt werden, der bzw. die in ein elektronisches Netzwerk eingebunden ist. Ein solcher Server bzw. die Serverstruktur kann die Signaturprüfung für Datenpakete für eine Vielzahl von Empfängern automatisiert durchführen. Darüber hinaus kann über einen solchen Server auch die Speicherung sowohl von Datenpaketen als auch von den zugehörigen Prüfprotokollen angeboten werden. Von einem solchen, auch die Funktion des Datenarchivs übernehmenden Server kann dann das darin gespeicherte Datenpaket mittels der Zusendung des ihm zugeordneten Identifiers abgerufen werden.

Der Server bzw. die Serverstruktur kann in einer bevorzugten Ausgestaltung des erfindungsgemäßen Verfahrens von einer unabhängigen Instanz betrieben werden. Unter einer unabhängigen Instanz ist insbesondere ein besonders vertrauenswürdiger Internet-Dienstanbieter, wie beispielsweise ein Trust-Center, zu verstehen, dessen Unabhängigkeit und Vertrauenswürdigkeit von geeigneter Stelle testiert wurde.

Das Datenpaket, das insbesondere eine elektronische Rechnung sein kann, wird dem Empfänger in aller Regel vollständig oder in Teilen automatisch übermittelt werden, ohne dass er das digitale Dokument unter Angabe des Identifiers aus dem Datenarchiv abruft. Allerdings ist dies nicht zwingend notwendig, sofern auf andere Weise sichergestellt ist, dass der Empfänger vom Inhalt des digitalen Dokuments Kenntnis erhält.

Das Verfahren ist besonders geeignet, um den Medienbruch, der zwischen einer automatisierten, ausschließlich elektronischen Datenverarbeitung und einer papierbasierten Datenverarbeitung besteht, handhabbar zu gestalten. So kann das digitale Dokument einschließlich der hinzugefügten Hinweise zum Datenarchiv und zum Identifier vom bzw. für den Empfänger auf Papier ausgedruckt werden, wobei der Ausdruck eine Referenz auf das ordnungsgemäß verarbeitete digitale Dokument darstellt.

Die oben genannte Aufgabe wird auch gelöst mit einer Serverstruktur zur Signaturprüfung in einem offenen Netzwerk mit den Merkmalen des Anspruchs 12.

Unter Mitteln werden hier und im Folgenden insbesondere elektronische Komponenten eines Computers, Computer oder mehrere zusammenwirkende Computer verstanden, die eine bestimmte Funktion ausführen. Wie diese Mittel zur Durchführung einer bestimmten Funktion beschaffen und per Software betrieben werden müssen, ist dem Fachmann hinlänglich bekannt, so dass an dieser Stelle nicht näher darauf eingegangen wird.

Die beanspruchte Serverstruktur, die aus einem oder mehreren in das offene Netzwerk eingebundenen Computern bzw. Servern bestehen kann, kann alle die im Zusammenhang mit der Signaturprüfung zu bewältigenden Aufgaben übernehmen, insbesondere die SignaturPrüfung und das Erstellen des Prüfprotokolls zur Signaturprüfung, das Anhängen des Prüfprotokolls und gegebenenfalls des Identifiers an das Datenpaket, das Speichern bzw. Archivieren der elektronisch signierten digitalen Dokumente, die Benachrichtigung des Empfängers über das Vorliegen eines elektronisch signierten digitalen Dokuments durch Senden mindestens des dem digitalen Dokument hinzugefügten Identifiers und ggf. des elektronisch signierten digitalen Dokuments an den Empfänger, wobei das Senden des elektronisch signierten digitalen Dokuments an den Empfänger wahlweise mit oder ohne Prüfprotokoll automatisch oder auf Anfrage des Empfängers erfolgen kann.

Auch kann eine solche Serverstruktur mit Mitteln zum Erzeugen und zum Versenden eines eindeutigen Identifiers an einen Absender ausgestattet sein. Diese Mittel können beispielsweise als Identifier fortlaufende Nummern vergeben oder aber mithilfe eines Zufallszahlengenerators eine beliebige Zahlen- oder Ziffernfolge als Identifier generieren, wobei dann zu überprüfen ist, ob die beliebige Zahlen- oder Ziffernfolge bereits schon einmal vergeben worden ist.

Im Folgenden wird die Erfindung anhand von einer Figur, die ein bevorzugtes Ausführungsbeispiel der Erfindung zeigt, näher erläutert.

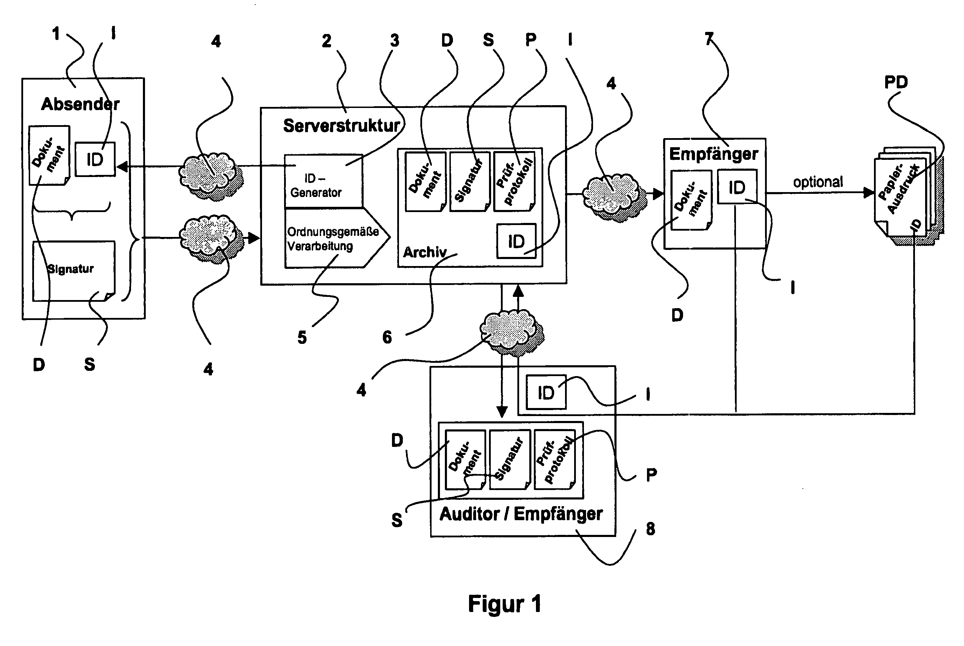

Figur 1 zeigt ein Diagramm zur Erläuterung des Ablaufs eines bevorzugten, beispielhaften Verfahrens gemäß der Erfindung.

In einer Serverstruktur **1** eines Absenders wird ein digitales Dokument **D** erzeugt. Darüber hinaus wird von einer Serverstruktur zur Signaturprüfung **2,** die einen ID-Generator **3** aufweist, ein Identifier **ID** angefordert, der eine für ein Datenpaket eindeutige, insbesondere zufällige Zeichenkette enthält, und dem digitalen Dokument **D** hinzugefügt. Beides wird mit einer elektronischen Signatur **S** versehen. Ein aus dem digitalen Dokument, dem Identifier **ID** und der elektronischen Signatur **S** bestehendes Datenpaket wird über das Internet **4** an eine Serverstruktur zur Signaturprüfung **2** übersandt.

Die Serverstruktur zur Signaturprüfung **2** umfasst Mittel zur ordnungsgemäßen Verarbeitung des Datenpakets **5,** insbesondere zur Prüfung der Signatur **S** des digitalen Dokuments **D** und zur Erzeugung eines Prüfprotokolls **P** über die Signaturprüfung. Des weiteren umfasst die Serverstruktur **3** einen ID-Generator **5,** der für jedes zu verarbeitende bzw. verarbeitete Datenpaket einen **I**dentifier **1** erzeugt, Schließlich umfasst die Serverstruktur zur Signaturprüfung **3** auch ein Datenarchiv **6.** In diesem Datenarchiv **6** werden die jeweils um einen Identifier **1** und ein Prüfprotokoll **P** erweiterten Datenpakete gespeichert.

Das digitale Dokument **D** sowie der Identifier **I.** der dem das digitale Dokument **D** enthaltenden Datenpaket zugeordnet ist, wird von der Serverstruktur **3** an einen Empfängerrechner **7** zugesandt. Der Empfänger hat nun die Möglichkeit, alle dem digitalen Dokument **D** zugeordneten Daten, die im Datenarchiv **6** gespeichert sind, abzurufen, indem er den Identifier **1** an die Serverstruktur **3** zur Signaturprüfung übermittelt.

Die Serverstruktur **3** versendet dann auf Abruf die im Datenarchiv **6** gespeicherten Daten, insbesondere das digitale Dokument **D,** die Signatur **S** des digitalen Dokuments **D,** das Prüfprotokoll **P** und den Identifier 1 an einen Rechner des Empfängers **8,** der der gleiche Rechner wie Empfängerrechner **7** oder auch der Rechner eines Auditors **8** sein kann.

Als Nachweis der Existenz des signierten digitalen Dokuments und des Prüfprotokolls über die Prüfung der Signatur kann der Empfänger beispielsweise einen Ausdruck **PD** des digitalen Dokuments auf Papier erstellen, auf dem die Zeichenfolge des Identifiers 1**,** gegebenenfalls zusammen mit einer Netzinformation zur Netzwerkadresse des Datenarchivs, aufgedruckt ist.

Dieses Verfahren kann vielfältig variiert werden, woraus sich auch weitere Vorteile ergeben können. So muss das Signieren des Datenpakets und das Anhängen der Signatur an das Datenpaket nicht zwingend beim Absender erfolgen, es kann von einem "externen" Dienst wie der Serverstruktur 2 erfolgen. Umgekehrt kann nach erfolgter Signaturerzeugung beim Absender auch die Signaturprüfung samt dem Erstellen eines Prüfprotokolls zur Signaturprüfung und das Anhängen des Prüfprotokolls an das Datenpaket beim Absender erfolgen. Ebenso kann die ID auf Seiten des Absenders erzeugt und dem Datenpaket angehängt werden. Entscheidend ist vor allem, dass der Identifier und das digitale Dokument elektronisch gemeinsam signiert werden und die Signatur dem Datenpaket beigefügt wird.

## Patentansprüche

1. Verfahren zur Zustellung und Archivierung von signierten digitalen Dokumenten in einem elektronischen Netzwerk, bei dem
- ein digitales Datenpaket erzeugt wird, das mindestens ein digitales Dokument eines Absenders enthält,
- das Datenpaket digital signiert und die digitale Signatur dem Datenpaket angehängt wird;
- die Gültigkeit der digitalen Signatur im Rahmen einer Signaturprüfung geprüft und ein Prüfprotokoll über die Signaturprüfung erzeugt wird;
- das Prüfprotokoll dem Datenpaket angehängt wird; und
- das Datenpaket an ein Datenarchiv übermittelt wird;
**dadurch gekennzeichnet, dass**
- vor der digitalen Signierung des digitalen Datenpakets ein das digitaler Dokument eindeutig identifizierender Identifier erzeugt und dem digitalen Datenpaket hinzugefügt wird, und
- einem Empfänger der signierten digitalen Dokumente mindestens der Identifier und ein Hinweis auf das Datenarchiv übermittelt werden, wobei der Empfänger das Datenpaket unter Angabe mindestens des Identifiers vom Datenarchiv beziehen kann.

2. Verfahren nach Anspruch 1, **dadurch gekennzeichnet, dass** dem Empfänger die elektronische Signatur übermittelt wird.

3. Verfahren nach Anspruch 1 oder 2, **dadurch gekennzeichnet, dass** dem digitalen Dokument zusammen mit dem Identifier ein Hinweis auf die Netzwerkadresse des Datenarchivs hinzugefügt wird.

4. Verfahren nach einem der vorstehenden Ansprüche, **dadurch gekennzeichnet, dass** der Identifier eine zufällige, aber eindeutige Zeichenkette enthält, deren alleinige Angabe dem Empfänger den Zugriff auf das Datenpaket im Datenarchiv erlaubt.

5. Verfahren nach einem der vorstehenden Ansprüche, **dadurch gekennzeichnet, dass** die Signaturprüfung von einer unabhängigen Instanz vorgenommen wird.

6. Verfahren nach einem der vorstehenden Ansprüche, **dadurch gekennzeichnet, dass** die Archivierung durch eine unabhängige Instanz vorgenommen und das Dateiarchiv insbesondere von einer unabhängigen Instanz verwaltet wird.

7. Verfahren nach einem der vorstehenden Ansprüche, **dadurch gekennzeichnet, dass** der Identifier durch eine unabhängige Instanz erzeugt wird.

8. Verfahren nach einem der vorstehenden Ansprüche, **dadurch gekennzeichnet, dass** die Signaturprüfung erst vorgenommen und das Prüfprotokoll über die Signaturprüfung erst erzeugt wird, wenn der Empfänger das Datenpaket vom Datenarchiv bezieht.

9. Verfahren nach einem der vorstehenden Ansprüche, **dadurch gekennzeichnet, dass** das digitale Dokument eine digitale Rechnung ist.

10. Verfahren nach Anspruch 3 oder einem der darauf rückbezogenen Ansprüche, **dadurch gekennzeichnet, dass** das Dokument einschließlich der hinzugefügten Hinweise zum Datenarchiv und zum Identifier auf Papier ausgedruckt wird, und der Ausdruck eine Referenz auf das ordnungsgemäß verarbeitete digitale Dokument darstellt.

11. Verfahren nach einem der vorstehenden Ansprüche, **dadurch gekennzeichnet, dass** das elektronische Netzwerk ein offenes Netzwerk, insbesondere das Internet ist.

12. Serverstruktur zur Signaturprüfung in einem offenen Netzwerk zur Durchführung eines Verfahrens nach einem der vorstehenden Ansprüche mit
- Mitteln zum Empfangen eines Datenpakets von einem Absender, wobei das Datenpaket mindestens Informationen zur Identität des Absenders, Daten zur Netzwerkadresse des Empfängers sowie mindestens ein digital signiertes, mit einem Identifier versehenes digitales Dokument enthält,
- Mitteln zum Überprüfen der Gültigkeit der Signatur im Rahmen einer Signaturprüfung,
- Mitteln zum Erzeugen eines Protokolls zur Signaturprüfung,
- Mitteln zum Anhängen des Prüfprotokolls an das Datenpaket,
- Mitteln zur weiteren Verarbeitung einschließlich dem Speichern des Datenpakets, und
- Mitteln zum Versenden mindestens des Identifiers und von Angaben zur Netzwerkadresse der Speichermittel an die Netzwerkadresse des Empfängers.

13. Serverstruktur nach Anspruch 12, **gekennzeichnet durch** Mittel zum Erzeugen eines Identifiers für das Datenpaket auf Anfrage eines Absenders und zum Versenden des Identifiers an den Absender.

14. Serverstruktur nach Anspruch 12 oder 13, **gekennzeichnet durch** Mittel zum Erzeugen einer elektronischen Signatur für ein Datenpaket.

15. Serverstruktur nach einem der Ansprüche 12 bis 14, **gekennzeichnet durch**
- Mittel zum Empfangen eines Identifiers vom Empfänger zum Abruf des Datenpakets samt Prüfprotokoll,
- Mittel zum Zuordnen des Identifiers zum abgespeicherten Datenpaket;
- Mittel zum Versenden des Datenpakets zusammen mit dem Prüfprotokoll an die Netzwerkadresse des Empfängers.

16. Serverstruktur nach einem der Ansprüche 12 bis 15, **dadurch gekennzeichnet, dass** die Speichermittel Mittel zum Archivieren von Datenpaketen umfassen.

17. Serverstruktur nach einem der Ansprüche 12 bis 16, **gekennzeichnet durch** mindestens einen Computer.

18. Serverstruktur nach einem der Ansprüche 12 bis 17, **gekennzeichnet durch** eine Anbindung an das Internet.

## Claims

1. Method for delivering and archiving signed digital documents in an electronic network, in which
- a digital data packet is produced which contains at least one digital document of a sender,
- the data packet is digitally signed and the digital signature is attached to the data packet;
- the validity of the digital signature is verified within the framework of a signature verification and a test protocol concerning the signature verification is produced;
- the test protocol is attached to the data packet and
- the data packet is transmitted to a data archive;
**characterised in that**
- prior to digitally signing the digital data packet an identifier, which uniquely identifies the digital document, is generated and added to the digital data packet and
- at least the identifier and an item of information related to the data archive are transmitted to a recipient of the signed digital documents, wherein the recipient can obtain the data packet from the data archive by at least specifying the identifier.

2. Method according to Claim 1, **characterised in that** the electronic signature is transmitted to the recipient.

3. Method according to Claim 1 or 2, **characterised in that** an item of information related to the network address of the data archive is added to the digital document together with the identifier.

4. Method according to any one of the preceding claims, **characterised in that** the identifier contains a random but unique string, which when indicated alone allows the recipient access to the data packet in the data archive.

5. Method according to any one of the preceding claims, **characterised in that** the signature verification is carried out by an independent party.

6. Method according to any one of the preceding claims, **characterised in that** the archiving is carried out by an independent party and the file archive is in particular managed by an independent party.

7. Method according to any one of the preceding claims, **characterised in that** the identifier is generated by an independent party.

8. Method according to any one of the preceding claims, **characterised in that** the signature is only verified and the test protocol concerning the signature verification only produced when the recipient obtains the data packet from the data archive.

9. Method according to any one of the preceding claims, **characterised in that** the digital document is a digital invoice.

10. Method according to Claim 3 or any one of the claims which refer back to it, **characterised in that** the document, including the information added regarding the data archive and the identifier, is printed out on paper and the printout represents a reference to the digital document processed in due form.

11. Method according to any one of the preceding claims, **characterised in that** the electronic network is an open network, in particular the internet.

12. Server structure for verifying signatures in an open network for carrying out a method according to any one of the preceding claims, having
- means for receiving a data packet from a sender, wherein the data packet contains at least information regarding the identity of the sender, data regarding the network address of the recipient and at least one digitally signed digital document provided with an identifier,
- means for verifying the validity of the signature within the framework of a signature verification,
- means for producing a protocol concerning the signature verification,
- means for attaching the test protocol to the data packet,
- further processing means, including storing the data packet, and
- means for sending at least the identifier and details regarding the network address of the storage means to the network address of the recipient.

13. Server structure according to Claim 12, **characterised by** means for generating an identifier for the data packet when requested by a sender and for sending the identifier to the sender.

14. Server structure according to Claim 12 or 13, **characterised by** means for producing an electronic signature for a data packet.

15. Server structure according to any one of Claims 12 to 14, **characterised by**
- means for receiving an identifier from the recipient for retrieving the data packet along with the test protocol,
- means for matching the identifier to the stored data packet;
- means for sending the data packet together with the test protocol to the network address of the recipient.

16. Server structure according to any one of Claims 12 to 15, **characterised in that** the storage means comprise means for archiving data packets.

17. Server structure according to any one of Claims 12 to 16, **characterised by** at least one computer.

18. Server structure according to any one of Claims 12 to 17, **characterised by** a connection to the internet.

## Revendications

1. Procédé de distribution et d'archivage de documents numériques signés dans un réseau électronique, dans lequel
- un paquet de données numérique est généré qui contient au moins un document numérique d'un expéditeur ;
- le paquet de données est signé de façon numérique et la signature numérique est jointe au paquet de données ;
- la validité de la signature numérique est vérifiée dans le cadre d'une vérification de signature et un protocole de vérification concernant la vérification de signature est généré;
- le protocole de vérification est joint au paquet de données ; et
- le paquet de données est transmis à une archive de données;
**caractérisé en ce que**
- avant la signature numérique du paquet de données numérique, un identificateur identifiant le document numérique de façon univoque est généré et ajouté au paquet de données numérique; et
- au moins l'identificateur et un pointeur vers l'archive de données sont transmis à un destinataire des documents numériques signés, dans lequel le destinataire peut recevoir le paquet de données de l'archive de données en spécifiant au moins l'identificateur.

2. Procédé selon la revendication 1, **caractérisé en ce que** la signature électronique est transmise au destinataire.

3. Procédé selon la revendication 1 ou 2, **caractérisé en ce que** conjointement avec l'identificateur, un pointeur vers l'adresse réseau de l'archive de données est ajouté au document numérique.

4. Procédé selon l'une quelconque des revendications précédentes, **caractérisé en ce que** l'identificateur contient une chaîne de caractères aléatoire mais univoque dont la seule spécification permet au destinataire d'accéder au paquet de données dans l'archive de données.

5. Procédé selon l'une quelconque des revendications précédentes, **caractérisé en ce que** la vérification de signature est effectuée par une instance indépendante.

6. Procédé selon l'une quelconque des revendications précédentes, **caractérisé en ce que** l'archivage est effectué par une instance indépendante et l'archive de données est gérée en particulier par une instance indépendante.

7. Procédé selon l'une quelconque des revendications précédentes, **caractérisé en ce que** l'identificateur est généré par une instance indépendante.

8. Procédé selon l'une quelconque des revendications précédentes, **caractérisé en ce que** la vérification de signature est seulement effectuée et le protocole de vérification concernant la vérification de signature est seulement généré lorsque le destinataire reçoit le paquet de données de l'archive de données.

9. Procédé selon l'une quelconque des revendications précédentes, **caractérisé en ce que** le document numérique est une facture numérique.

10. Procédé selon la revendication 3 ou l'une des revendications se référant à celle-ci, **caractérisé en ce que** le document comprenant les pointeurs ajoutés vers l'archive de données et l'identificateur est imprimé sur papier et l'impression représente une référence au document numérique traité en bonne et due forme.

11. Procédé selon l'une quelconque des revendications précédentes, **caractérisé en ce que** le réseau électronique est un réseau ouvert, en particulier l'internet.

12. Structure de serveur pour la vérification de signatures dans un réseau ouvert pour exécuter un procédé selon l'une quelconque des revendications précédentes, comprenant :
- des moyens pour recevoir un paquet de données d'un expéditeur, dans lequel le paquet de données contient au moins des informations sur l'identité de l'expéditeur, des données sur l'adresse réseau du destinataire ainsi qu'au moins un document numérique signé de façon numérique et muni d'un identificateur ;
- des moyens pour vérifier la validité de la signature dans le cadre d'une vérification de signature ;
- des moyens pour générer un protocole de la vérification de signature;
- des moyens pour joindre le protocole de vérification au paquet de données ;
- des moyens pour le traitement ultérieur, y compris la mise en mémoire du paquet de données ; et
- des moyens pour expédier à l'adresse réseau du destinataire au moins l'identificateur et des indications concernant l'adresse réseau des moyens de mémoire.

13. Structure de serveur selon la revendication 12, **caractérisée par** des moyens pour générer un identificateur pour le paquet de données à la demande d'un expéditeur et pour envoyer l'identificateur à l'expéditeur.

14. Structure de serveur selon la revendication 12 ou 13, **caractérisée par** des moyens pour générer une signature électronique pour un paquet de données.

15. Structure de serveur selon l'une quelconque des revendications 12 à 14, **caractérisée par** :
- des moyens pour recevoir un identificateur du destinataire pour extraire le paquet de données avec le protocole de vérification ;
- des moyens pour attribuer l'identificateur au paquet de données mis en mémoire ;
- des moyens pour envoyer le paquet de données avec le protocole de vérification à l'adresse réseau du destinataire.

16. Structure de serveur selon l'une quelconque des revendications 12 à 15, **caractérisée en ce que** les moyens de mémoire comprennent des moyens pour archiver des paquets de données.

17. Structure de serveur selon l'une quelconque des revendications 12 à 16, **caractérisée par** au moins un ordinateur.

18. Structure de serveur selon l'une quelconque des revendications 12 à 17, **caractérisée par** une connexion à l'internet.
